# FASCICULE DE BREVET EUROPEEN

(11) **EP 3 983 480 B1**
(45) Date de publication et mention de la délivrance du brevet: **11.03.2026**
(21) Numéro de dépôt: 20731084.8
(22) Date de dépôt: 09.06.2020
(51) Int. Cl.: B29C 45/00, C08K 11/00, C08L 23/10, B60R 13/02, C08L 23/04, C08L 67/04, C08K 3/34, C08L 97/02

(54) **PIÈCE INTÉRIEURE DE VÉHICULE AUTOMOBILE INTÉGRANT DES COMPOSANTS BIOSOURCÉS**
KRAFTFAHRZEUGINNENTEIL MIT BIOBASIETEN KOMPONENTEN
INTERIOR AUTOMOTIVE PART COMPRISING BIOBASED COMPOUNDS

(30) Priorité: 12.06.2019 FR 1906252
(43) Date de publication de la demande: 20.04.2022
(73) Titulaire: SMRC Automotive Holdings Netherlands B.V., 1101 BA Amsterdam (NL)
(72) Inventeur: RONDOT, Maud, 59000 LILLE (FR); BROCHOT, Benjamin, 59800 LILLE (FR); HOCHART, Olivier, 62980 NOYELLES LES VERMELLES (FR)
(74) Mandataire: Ipsilon
(86) Numéro de dépôt international: PCT/EP2020/065975
(87) Numéro de publication internationale: WO 2020/249562

(56) Documents cités:
- JP-A- 2017 081 155
- US-A1- 2017 274 568
- US-A1- 2018 044 512
- US-A1- 2018 127 554
- US-B2- 6 827 991
- DATABASE WPI Week 199801, Derwent World Patents Index; AN 1998-004287, XP002797507
- DATABASE WPI Week 201617, Derwent World Patents Index; AN 2015-74102B, XP002797508
- DATABASE WPI Week 201848, Derwent World Patents Index; AN 2018-47344B, XP002797509
- DATABASE WPI Week 201527, Derwent World Patents Index; AN 2015-24549M, XP002797510
- DATABASE WPI Week 201651, Derwent World Patents Index; AN 2016-200813, XP002797511

## Description

La présente invention s'inscrit dans le cadre des polymères issus de de la technique dite du « compoundage » de différentes matières dont des matières naturelles.

Elle s'inscrit dans un contexte actuel économique, démographique et environnemental.

Dans les dernières années, plusieurs signaux forts ont été observés tant au niveau des citoyens que des puissances économiques. Des constats alarmants ont provoqué une prise de conscience mondiale. L'attention particulière portée à notre planète se généralise ainsi.

Des notions de durabilité, d'économie circulaire, d'ACV (analyse de cycle de vie), de recyclage, de traçabilité des matériaux, etc., viennent s'ajouter aux qualités de performance et esthétiques requises des matériaux. La tendance actuelle est à une façon de créer et produire plus responsable tout en satisfaisant une qualité perçue satisfaisante pour les plus exigeants.

La volonté de limiter l'empreinte de l'homme nous emmène au retour d'une économie locale, plus responsable en circuit court avec une volonté de produire 0% de déchets.

Le problème posé dans le cadre de la présente invention concerne le défi relatif aux surfaces de demain et consiste à accompagner les mutations de la mobilité en absorbant les contraintes économiques et écologiques afin de créer un cercle vertueux du choix des matériaux de départ (aussi appelé « sourcing ») à l'ennoblissement.

A titre d'exemple non limitatif, on peut citer les enjeux d'une ville comme celle de Paris:
1 Végétalisation de Paris : on anticipe une densification de la population dans la région parisienne qui va s'accompagner d'une volonté de « ramener de la nature » dans la ville afin d'assainir la qualité de l'air notamment. Cela va par conséquent impliquer une quantité accrue de déchets verts à traiter de façon locale. L'idée principale est de revaloriser des déchets qui sont normalement incinérés afin de les promouvoir au rang d'éléments décoratifs à fort caractère identitaire.
2 Chantier du Grand Paris Express : c'est l'origine du plus gros tonnage de déchets à traiter dans les années à venir, selon l'organisme Paprec. Du fait, par exemple, des chantiers liés au RER, TER, les BTP, etc., une quantité importante de terres à « recycler » est générée. Les terres argileuses, normalement ré-enfouies, vont désormais devenir une ressource à part entière et une véritable inspiration pour les matériaux de la future mobilité : la gamme de couleurs est directement issue d'un contre typage des différentes typologies de terres locales. Revalorisées elles seront ainsi utilisées en pigments pour teinter les matières plastiques dites « bio » ou les peintures. La couleur obtenue crée un effet de rassemblement, elle est locale, authentique et issue de la nature de proximité.

CN 108 148 261 A1 décrit des pièces intérieures pour véhicule obtenues par injection d'une composition à base de PP, de poudre de bois et de talc. Ces compositions sont moulées par injection. Les pièces ne sont ni transparentes ni translucides. JP 2017 081155 A

décrit des pièces transparentes ou translucides pour automobiles par injection. Elles ne sont pas spécifiquement des pièces intérieures (lentilles de lampes).

La terre battue entre également en ligne de compte dans ce contexte.

La présente invention consiste en une pièce intérieure de véhicule tel que défini à la revendication 1.

A la base, elle est en principe réalisée par injection dans un moule, de préférence unique, d'une seule couche d'un polymère consistant en un mélange d'une résine thermoplastique, d'additifs minéraux (terres) et d'additifs végétaux (déchets végétaux), cette pièce comportant un aspect original, constitué, à l'état solide à 20 °C, d'un fond translucide voire éventuellement transparent (pourcentage de lumière traversante supérieur à 60 %), où se diffuse la teinte des particules de terre, parsemé de particules végétales.

Dans le cadre de la présente invention, on cherche donc à obtenir un effet décoratif qui se compose d'un fond uni dans lequel se détacheraient des éléments parsemés, afin d'obtenir un effet moucheté ou tacheté ou piqueté; le fond uni s'obtient grâce à la diffusion de la teinte subtile de premières charges micronisées, de manière homogène et non détachée dans la matrice translucide de la résine qui les reçoit ; les éléments qui donnent l'effet moucheté, sont aussi des charges micronisées qui ont cette fois des caractéristiques physiques et visuelles qui leur permettent de se détacher et de contraster par rapport au fond uni. Les deux types de charges sont des charges naturelles végétales et/ou minérales.

La pièce de base selon l'invention, après moulage par injection, est donc une pièce monocouche ou monobloc et non pas une pièce multicouches, telles que celles formées par surmoulage. Cela dit, dans une variante on peut appliquer à cette pièce de base une ou plusieurs couches supplémentaires (vernis) de protection par après, dans une opération différente et consécutive à l'étape de moulage par injection, comme cela sera expliqué plus loin.

Par « translucide » on entend une matière ou un matériau qui laisse passer la lumière (visible) sans permettre toutefois de distinguer nettement les contours des objets à travers et par « transparent » un tel matériau qui se laisse aisément traverser par la lumière (dans le domaine visible) et qui permet de distinguer nettement les objets à travers son épaisseur. On considère que la matière ou le matériau est transparent lorsque le pourcentage de lumière visible traversante est supérieur à 60%.

Les additifs minéraux sont issus de terres à recycler; ce sont par exemple les terres argileuses recyclées de Paris et des terres battues. Il peut aussi s'agir de la tuile, de brique, de béton(s), de coquilles de crustacés (moules, huîtres...).

Ces terres sont séchées, tamisées ; puis il y a séparation des indésirables de ces terres ; elles vont donner la teinte de fond de la pièce.

Les additifs végétaux sont des déchets issus des coupes, des tailles, des tontes et autres déchets verts des villes. On peut aussi utiliser de la drèche (houblon pour la bière) ou différents types de charbon. Ils sont séchés, broyés, micronisés, et tamisés ; ils vont donner un aspect moucheté.

De préférence, tous les ingrédients sont issus de filières de recyclage et sont à base, majoritairement, ou intégralement de matériaux recyclés.

La résine thermoplastique est par exemple du polypropylène (PP) ou du PHA biosourcé (c'est-à-dire non issu du pétrole, comme par exemple issu des ressources céréalières / de la filière du sucre, etc.), vierge, donc translucide ou blanc, voire transparente. On peut également envisager d'utiliser du PLA (acide polylactique) et /ou de l'ABS. De préférence, le PP utilisé est du PP recyclé (en tout ou en partie) et trié notamment selon sa couleur.

Les polyhydroxyalcanoates ou PHAs sont des polyesters biodégradables produits naturellement par fermentation bactérienne de sucres ou de lipides.

On obtient ainsi une pièce avec un aspect original, constitué d'un fond translucide voire transparent, où se diffuse la teinte des particules de terre, parsemé de particules végétales.

On peut réaliser dans un premier temps des lots principaux ou « masterbatchs » par la technique connue sous la dénomination anglo-saxonne de « compoundage » concentrés à 20-30 % de charge, à l'aide d'une extrudeuse bi-vis de type TSA de 21 mm (mise en configuration de la machine, tarage et choix des doseurs, étuvage dudit compound produit et nettoyage de la machine et des périphériques).

On obtient ainsi des granulés de masterbatch que l'on peut mélanger, lors de l'injection des pièces à la résine thermoplastique vierge (au moins translucide).

Des essais ont été réalisés avec une teneur allant de 0,1 % à 20 % en poids (masse) de masterbatch mélangé à la résine thermoplastique, soit une teneur en charge en poids (masse) allant de 4 % à 6 %.

Des résultats esthétiques particulièrement intéressants ont été obtenus en supprimant l'étape du « compounding », donc en mettant la charge micronisée puis tamisée directement dans la presse d'injection avec les granulés de thermoplastique (PP/PHA).

On obtient ainsi des charges végétales plus visibles, c'est-à-dire des particules plus grosses.

### Exemples de mélanges réalisés :

Tous les pourcentages sont massiques et se rapportent à la masse totale de résine(s) mises en œuvre. Une charge en éléments naturels de 2 %, par exemple, signifie que 200 g de charge ont été ajoutés à 10 kg de résine(s).

### A) Essais avec une matrice PHA

Il a été réalisé un panel complet de variations de pourcentages massiques d'éléments naturels mélangés au PHA, et les différentes combinaisons ainsi obtenues ont été testées.
- Argile Bleue *AB* 20 % - 5 % - 3,5 % - 2,5 % - 1 %
- Argile Verte *AV* 10 % - 7,5 % - 5 % - 3,5 % - 2,5 %
- Argile Rose *AR* 10 % - 5 % - 3,5 % - 2,5 % - 1,5 %
- Bois de taille 20 % - 1 %
- Herbe 20 % - 1 % - 0,5 % - 0,1 %
- Pétales de rose 20 % - 1 %
- Feuilles Jaunes *FJ* 5 % - 1 %
- Fleurs Oranges *FO* 5 % - 1 %
- Feuilles Marrons *FM* 5 % - 1 %

### B) Essais avec une matrice PP

Il a été réalisé un panel complet de variations de pourcentages massiques d'éléments naturels mélangés au PP, et les différentes combinaisons ainsi obtenues ont également été testées.
- PP + Argile Bleue *AB* 1 % + Fleurs Oranges *FO* 0,1 %
- PP + Argile Bleue *AB* 1 % + Fleurs Oranges *FO* 0,3 %
- PP + Argile Bleue *AB* 1 % + Fleurs Oranges *FO* 0,5 %
- PP + Argile Bleue *AB* 1 % + Feuilles Jaunes *FJ* 0,1 %
- PP + Argile Bleue *AB* 1 % + Feuilles Jaunes *FJ* 0,2 %
- PP + Argile Bleue *AB* 1 % + Feuilles Jaunes *FJ* 0,5 %
- PP + Feuilles Jaunes *FJ* 1 %
- PP + Argile Bleue *AB* 1 % + Herbe composite 0,1 %
- PP + Argile Bleue *AB* 1 % + Herbe composite 0,2 %
- PP + Argile Bleue *AB* 1 % + Herbe composite 0,5 % + Feuilles Jaunes *FJ* 5%
- PP + Argile Bleue *AB* 1 % + Fleurs Oranges *FO* 1 %
- PP + Argile Bleue *AB* 1 % + Fleurs Oranges *FO* 5 %
- PP + Argile Rose *AR* 1 % + Fleurs Oranges *FO* 1 %
- PP + Argile Rose *AR* 1 % + Pétales de rose 1 %
- PP + Argile Rose *AR* 1,5 %
- PP + Argile Rose AR 1,5 % + Herbe composite 0,2 %
- PP + Argile Bleue *AB* 3,5 %
- PP + Argile Bleue *AB* 3,5 % + Pétales de rose 1 %
- PP + Herbe compound 0,1 %
- PP + Fleurs Oranges *FO* 1 %
- PP + Feuilles Marrons *FM* 1 %
- PP + Argile Verte *AV* 7,5% + Pétales de rose 1 %
- PP + Argile Verte *AV* 5% + Fleurs jaunes FN 0,2 %
- PP + Argile Verte *AV* 7,5% + Feuilles marrons FM 0,1 %

Conclusion : Tous les différents mélanges réalisés ont été testés et ont donné lieu à la réalisation de pièces injectées selon l'invention ayant des aspects spécifiques originaux et donnant satisfaction.

En résumé et dans une version simplifiée, la présente invention porte donc sur un produit innovant constitué en une pièce intérieure de véhicule réalisée par injection, dans un seul moule, d'une seule couche d'un polymère consistant en un mélange d'une résine thermoplastique, d'additifs minéraux (terres) et d'additifs végétaux (déchets végétaux), de préférence sous forme de particules micronisées, cette pièce comportant un aspect particulier et original, constitué d'un fond translucide voire transparent, où se diffuse la teinte desdites particules minérales, qui donne un fond uni parsemé de particules micronisées végétales. L'aspect esthétique prend ici le pas sur les performances mécaniques et l'invention porte plutôt sur la présence d'additifs esthétiques que de charges (teneur plus importante), ce en prévoyant :
- un mélange coexistant de déchets végétaux et de terre ;
- de teneur préférentielle inférieure à 10 % en poids (additifs et non charges) ;
- le mélange se fait à froid se faisant préférentiellement dans un extrudeur ou directement dans une presse à injecter standards.

L'invention sera encore mieux comprise, grâce aux compléments d'information ci-après, qui se rapportent à des modes de réalisation préférés, donné à titre d'exemples non limitatifs. Des modes de réalisations avantageux sont indiqués dans les revendications dépendantes.

Dans un premier mode de réalisation, les charges sont amenées à une extrudeuse bi-vis standard pour obtenir à sa sortie des granulés dits de « masterbatch ». Dans ce premier procédé, la charge minérale ou assimilée (par exemple composée de terres) et la charge végétale (par exemple composée de déchets végétaux) suivent des voies séparées dans lesquelles ces matières brutes sont successivement séchées, broyées, micronisées, tamisées, et soumises à une opération de séparation des indésirables. Les deux charges ainsi traitées et rassemblées sont introduites à hauteur d'environ 20 % à 30 % en poids (masse) dans l'extrudeuse précitée avec un complément à 100 % soit environ 70 % à 80 % en poids (masse) de granulés de polypropylène ou de PHA bio-sourcé qui est également ajouté dans la trémie de ladite extrudeuse. A la sortie de cette dernière, on récupère les granulés précités.

Ces granulés sont ensuite additionnés de polypropylène ou de PHA bio-sourcé dans la trémie d'une presse à injection pour fabriquer la pièce moulée désirée. La teneur finale et totale en charges dans la pièce fabriquée ne dépasser pas les 10 % en poids (masse).

Dans un second mode de réalisation également envisageable, les deux charges susvisées sont introduites en même temps, après micronisation, avec des granulés de polymères (polypropylène ou PHA biosourcé) à froid dans la trémie d'une extrudeuse classique et l'ensemble du mélange est chauffé progressivement de 160 °C à 180 °C par paliers de 5 °C, ceci afin d'éviter d'endommager la qualité esthétique des additifs.

Le mélange réalisé à froid peut aussi se faire directement dans la presse à injecter.

En tout état de cause, la teneur totale en charges (minérale + végétale) dans la pièce finale est toujours inférieure à 10 % en poids (masse).

Grâce à l'invention, on obtient une pièce avec un aspect original, constituée d'un fond translucide voire transparent où se diffuse la teinte des particules de terre, parsemé de particules végétales directement visibles par l'utilisateur à la surface de ladite pièce.

Avantageusement, un dépôt, par exemple par pulvérisation ou un surmoulage par une couche transparente en PP transparent ou en PU transparent peut être réalisé sur ladite pièce, par exemple à des fins de protection ou pour réaliser des pièces plus épaisses, plus rigides ou solides, par exemple. Comme épaisseur on peut prévoir à titre d'exemple, quelques microns à quelques millimètres pour cette surcouche.

La présente invention a donc pour objet une pièce intérieure de véhicule, en particulier de véhicule automobile, obtenue par injection dans un moule, de préférence unique, d'une seule couche d'un polymère, caractérisée en ce que ladite pièce est constituée, à l'état solide à 20 °C, majoritairement en une résine thermoplastique vierge et/ou recyclée translucide, voire éventuellement transparente avec un pourcentage de lumière traversante supérieur à 60 %, d'au moins une charge minérale et/ou d'au moins une charge végétale sous la forme de particules micronisées, lesdits constituants conférant un fond uni translucide, voire éventuellement transparent à ladite pièce dans lequel se diffuse la teinte desdites particules micronisées de ladite au moins une charge minérale et/ou des particules micronisées de ladite au moins une charge végétale et parsemé desdites particules micronisées issues de ladite au moins une charge végétale et/ou desdites particules micronisées issues de ladite au moins une charge minérale.

Avantageusement, ladite pièce selon l'invention est caractérisée en ce que la résine thermoplastique vierge et/ou recyclée est une résine ou un mélange de résines biosourcées ou majoritairement biosourcées, et de préférence choisie dans le groupe formé par les polyesters, en particulier les polyhydroxyalcanoates (PHA) ou leurs dérivés, les polypropylènes (PP) ou leurs dérivés, les polyéthylènes (PE) ou leurs dérivés, le PLA et ses dérivés et/ou l'ABS et ses dérivés.

De façon particulièrement intéressante, ladite pièce est encore caractérisée en ce que la ou les résines sont biodégradables en tout ou en partie. Ceci réduit encore l'impact environnemental, notamment en facilitant l'élimination des déchets autre que par compostage ou méthanisation.

Selon un mode de réalisation particulièrement avantageux, la ou les résines sont issues de la fermentation bactérienne de sucres ou de lipides. Cette filière produit des résines particulières adaptées et écologiques.

Selon une autre caractéristique, la pièce selon l'invention est caractérisée en ce que la quantité de résine(s) dans la pièce finie est supérieure à 90 % en poids. Lors de la fabrication de granulés intermédiaires, la teneur en résine(s) dans ces derniers est de préférence comprise entre 70 % et 80 % en poids.

De plus, la pièce selon la présente invention est encore caractérisée en ce que la charge minérale est constituée de terres à recycler, notamment de terres argileuses et/ou de terres battues, séchées et/ou tamisées et/ou broyés et micronisées en particules.

En outre, la charge végétale de la pièce selon la présente invention est constituée de végétaux, de préférence de déchets végétaux séchés, broyés, micronisés et tamisés et plus préférentiellement de déchets végétaux issus des coupes, tailles, abattages, tontes ou similaire.

Avantageusement, la pièce intérieure selon l'invention est encore caractérisée en ce qu'elle est obtenue exclusivement à partir de(s) résine(s) et que l'ensemble des charges minérales et végétales représente au plus 10 % en poids du mélange destiné à former ladite pièce à l'exclusion de tout autre additif.

Selon un autre aspect, ladite pièce selon l'invention est caractérisée en ce que la charge minérale représente entre 1 % et 7,5 % en poids du mélange destiné à former ladite pièce. Parallèlement, la charge végétale susmentionnée représente entre 0,1 % et 5 % en poids du mélange destiné à former ladite pièce.

Selon un mode de réalisation particulier, la pièce selon la présente invention est également caractérisée en ce qu'elle présente au moins une couche externe transparente ou pour le moins translucide supplémentaire, en particulier au moins une couche de protection appliquée de préférence par dépôt, par exemple par pulvérisation ou par surmoulage et réalisée, ou majoritairement réalisée, en une matière plastique transparente ou pour le moins translucide, de préférence en une matière plastique constituée, ou majoritairement constituée, de polypropylène ou de polyuréthane. Ici aussi, on entend par transparent un élément à l'état solide à 20 °C laissant passer la lumière visible et où le pourcentage de lumière traversante est supérieur à 60 %.

Enfin, la présente invention a également et naturellement pour objet un véhicule, en particulier véhicule automobile, caractérisé en ce qu'il comporte au moins une pièce intérieure réalisée selon l'invention.

En résumé et dans une version simplifiée, la présente invention porte donc sur un produit innovant, constitué en une pièce intérieure de véhicule réalisée par injection d'un polymère consistant en un mélange d'une résine thermoplastique, d'additifs minéraux (terres) et d'additifs végétaux (déchets végétaux), cette pièce comportant un aspect particulier et original, constitué, à l'état solide à 20 °C, d'un fond translucide et éventuellement transparent, où se diffuse la teinte des particules de terre, qui donne un fond uni parsemé de particules végétales. L'aspect esthétique prend ici le pas sur les performances mécaniques et l'invention porte plutôt sur la présence d'additifs esthétiques que de charges (teneur plus importante), ce en prévoyant:
- un mélange coexistant de déchets végétaux et de terre ;
- de teneur préférentielle inférieure à 10 % en poids ; et
- que le mélange se fait à froid se faisant préférentiellement dans un extrudeur conventionnel ou directement dans une presse à injecter classique.

## Revendications

1. Pièce intérieure de véhicule, en particulier de véhicule automobile, obtenue par injection dans un moule, de préférence unique, d'une seule couche d'un polymère, **caractérisée en ce que** ladite pièce est constituée, à l'état solide à 20 °C,
- majoritairement en une résine thermoplastique vierge et/ou recyclée translucide de sorte que la résine laisse passer la lumière visible sans permettre toutefois de distinguer nettement les contours des objets à travers, voire éventuellement transparente de sorte que le pourcentage de lumière visible que laisse traverser la résine est supérieur à 60 % permettant de distinguer nettement les objets à travers son épaisseur,
- d'au moins une charge minérale et/ou d'au moins une charge végétale sous la forme de particules micronisées,
lesdits constituants conférant à ladite pièce un fond uni translucide translucide laissant passer la lumière visible sans permettre toutefois de distinguer nettement les contours des objets à travers, voire éventuellement transparent laissant traverser plus de 60% de la lumière visible permettant de distinguer nettement les objets à travers son épaisseur dans lequel se diffuse la teinte desdites particules micronisées de ladite au moins une charge minérale et/ou des particules micronisées de ladite au moins une charge végétale et parsemé desdites particules micronisées issues de ladite au moins une charge végétale et/ou desdites particules micronisées issues de ladite au moins une charge minérale.

2. Pièce selon la revendication 1, **caractérisée en ce que** la résine thermoplastique vierge et/ou recyclée est une résine ou un mélange de résines biosourcées ou majoritairement biosourcées, et de préférence choisie dans le groupe formé par les polyesters, en particulier les polyhydroxyalcanoates (PHA) ou leurs dérivés, les polypropylènes (PP) ou leurs dérivés, les polyéthylènes (PE) ou leurs dérivés, le PLA et ses dérivés et/ou l'ABS et ses dérivés.

3. Pièce selon la revendication 2, **caractérisée en ce que** la ou les résines sont biodégradables, en tout ou en partie.

4. Pièce selon la revendication 2 ou 3, **caractérisée en ce que** la ou les résines sont issues de la fermentation bactérienne de sucres ou de lipides.

5. Pièce selon l'une quelconque des revendications 1 à 4, **caractérisée en ce que** la quantité de résine(s) dans la pièce finie est supérieure à 90 % en poids.

6. Pièce selon l'une quelconque des revendications 1 à 5, **caractérisée en ce que** la charge minérale est constituée de terres à recycler, notamment de terres argileuses et/ou de terres battues, séchées et/ou tamisées et/ou broyés et micronisées en particules.

7. Pièce selon l'une quelconque des revendications 1 à 6, **caractérisée en ce que** la charge végétale est constituée de végétaux, de préférence de déchets végétaux séchés, broyés, micronisés et tamisés et plus préférentiellement de déchets végétaux issus des coupes, tailles, abattages, tontes ou similaire.

8. Pièce selon l'une quelconque des revendications 1 à 7, **caractérisée en ce qu'**elle est obtenue exclusivement à partir de(s) résine(s) et de charge(s) minérale et végétale et que l'ensemble des charges minérales et végétales représente au plus 10 % en poids de ladite pièce à l'exclusion de tout autre additif.

9. Pièce selon l'une quelconque des revendications 1 à 8, **caractérisée en ce que** la charge minérale représente entre 1 % et 7,5 % en poids du mélange destiné à former ladite pièce.

10. Pièce selon l'une quelconque des revendications 1 à 9, **caractérisée en ce que** la charge végétale représente entre 0,1 % et 5 % en poids du mélange destiné à former ladite pièce.

11. Pièce selon l'une quelconque des revendications 1 à 10, **caractérisée en ce qu'**elle présente au moins une couche externe supplémentaire translucide, à l'état solide à 20 °C, voire éventuellement transparente avec un pourcentage de lumière traversante supérieur à 60 % en particulier au moins une couche de protection appliquée de préférence par dépôt, par exemple par pulvérisation ou par surmoulage et réalisée, ou majoritairement réalisée, en ladite matière plastique transparente ou pour le moins translucide, de préférence en une matière plastique constituée, ou majoritairement constituée, de polypropylène ou de polyuréthane.

12. Véhicule, en particulier véhicule automobile, **caractérisé en ce qu'**il comporte au moins une pièce intérieure réalisée selon l'une quelconque des revendications 1 à 11.

## Patentansprüche

1. Innenraumteil eines Fahrzeugs, insbesondere eines Kraftfahrzeugs, das durch Spritzen einer einzelnen Schicht aus einem Polymer in ein, vorzugsweise einziges, Werkzeug erhalten wird, **dadurch gekennzeichnet, dass** das Teil im festen Zustand bei 20°C
- hauptsächlich aus einem neu produzierten und/oder recycelten durchscheinenden thermoplastischen Kunststoff besteht, sodass der Kunststoff sichtbares Licht hindurchlässt, ohne dass sich jedoch hindurch die Umrisse von Gegenständen deutlich erkennen lassen, oder sogar durchsichtigen thermoplastischen Kunststoff besteht, sodass der Prozentanteil sichtbaren Lichts, den der Kunststoff hindurchlässt, über 60% beträgt, sodass sich durch seine Dicke hindurch Gegenstände deutlich erkennen lassen,
- aus mindestens einem mineralischen Füllstoff und/oder mindestens einem Füllstoff pflanzlichen Ursprungs in Form von mikronisierten Teilchen besteht, wobei die Bestandteile bei dem Teil für einen durchscheinenden einfarbigen Hintergrund sorgen, der sichtbares Licht hindurchlässt, ohne dass sich jedoch hindurch die Umrisse von Gegenständen deutlich erkennen lassen, oder einen gegebenenfalls durchsichtigen einfarbigen Hintergrund, der mehr als 60% sichtbares Licht hindurchlässt, sodass sich durch seine Dicke hindurch Gegenstände deutlich erkennen lassen, indem sich der Farbton der mikronisierten Teilchen des mindestens einen mineralischen Füllstoffs und/oder der mikronisierten Teilchen des mindestens einen Füllstoffs pflanzlichen Ursprungs verteilt und indem die mikronisierten Teilchen aus dem mindestens einen Füllstoff pflanzlichen Ursprungs und/oder die mikronisierten Teilchen aus dem mindestens einen mineralischen Füllstoff eingestreut sind.

2. Teil nach Anspruch 1, **dadurch gekennzeichnet, dass** der neu produzierte und/oder recycelte thermoplastische Kunststoff ein biobasierter Kunststoff oder ein Gemisch aus biobasierten oder hauptsächlich biobasierten Kunststoffen ist und vorzugsweise aus der Gruppe ausgewählt ist, die von Polyestern, insbesondere Polyhydroxyalkanoaten (PHA) oder ihren Abkömmlingen, Polypropylenen (PP) oder ihren Abkömmlingen, Polyethylenen (PE) oder ihren Abkömmlingen, PLA und ihren Abkömmlingen und/oder ABS und seinen Abkömmlingen gebildet wird.

3. Teil nach Anspruch 2, **dadurch gekennzeichnet, dass** der Kunststoff oder die Kunststoffe vollständig oder teilweise biologisch abbaubar ist bzw. sind.

4. Teil nach Anspruch 2 oder 3, **dadurch gekennzeichnet, dass** der Kunststoff oder die Kunststoffe durch bakterielle Fermentation von Zuckern oder Lipiden gewonnen werden.

5. Teil nach einem der Ansprüche 1 bis 4, **dadurch gekennzeichnet, dass** die Menge an Kunststoff(en) im Endteil über 90 Gewichts-% beträgt.

6. Teil nach einem der Ansprüche 1 bis 5, **dadurch gekennzeichnet, dass** der mineralische Füllstoff aus zu recycelnden Böden besteht, insbesondere Tonböden und/oder Sandplätzen, die getrocknet und/oder gesiebt und/oder zerkleinert und zu Teilchen mikronisiert werden.

7. Teil nach einem der Ansprüche 1 bis 6, **dadurch gekennzeichnet, dass** der Füllstoff pflanzlichen Ursprungs aus Pflanzen besteht, vorzugsweise aus getrockneten, zerkleinerten, mikronisierten und gesiebten Pflanzenabfällen und bevorzugter aus Pflanzenabfällen, die beim Schnitt, Zurückschneiden, Abholzen, Mähen oder Ähnlichem anfallen.

8. Teil nach einem der Ansprüche 1 bis 7, **dadurch gekennzeichnet, dass** es ausschließlich aus Kunststoff(en) und mineralischem Füllstoff und Füllstoff pflanzlichen Ursprungs erhalten wird und dass der bzw. die mineralischen Füllstoffe und der bzw. die Füllstoffe pflanzlichen Ursprungs insgesamt höchstens 10 Gewichts-% des Teils abgesehen von jeglichen anderen Additiven ausmachen.

9. Teil nach einem der Ansprüche 1 bis 8, **dadurch gekennzeichnet, dass** der mineralische Füllstoff zwischen 1 Gewichts-% und 7,5 Gewichts-% des Gemischs ausmacht, aus dem das Teil geformt werden soll.

10. Teil nach einem der Ansprüche 1 bis 9, **dadurch gekennzeichnet, dass** der Füllstoff pflanzlichen Ursprungs zwischen 0,1 Gewichts-% und 5 Gewichts-% des Gemischs ausmacht, aus dem das Teil geformt werden soll.

11. Teil nach einem der Ansprüche 1 bis 10, **dadurch gekennzeichnet, dass** es im festen Zustand bei 20°C mindestens eine zusätzliche durchscheinende Außenschicht aufweist, gegebenenfalls sogar durchsichtig mit einem Prozentanteil durchgelassenen Lichts von über 60 %, insbesondere mindestens eine Schutzschicht, die vorzugsweise durch Auftragen, beispielsweise durch Aufsprühen oder Umspritzen, aufgebracht ist oder die hauptsächlich aus dem durchsichtigen oder zumindest durchscheinenden Kunststoffwerkstoff gefertigt ist, vorzugsweise aus einem Kunststoffwerkstoff, der aus Polypropylen oder Polyurethan besteht oder hauptsächlich daraus besteht.

12. Fahrzeug, insbesondere Kraftfahrzeug, **dadurch gekennzeichnet, dass** es mindestens ein Innenraumteil aufweist, das nach einem der Ansprüche 1 bis 11 ausgeführt ist.

## Claims

1. Vehicle, in particular motor vehicle, interior part obtained by injection moulding in a mould, preferably a single mould, of a single layer of a polymer, **characterized in that** said part consists, in the solid state at 20°C,
- predominantly of a virgin and/or recycled thermoplastic resin that is translucent such that the resin allows visible light to pass through without, however, making it possible to clearly distinguish the outlines of objects through, indeed even optionally transparent such that the percentage of visible light the resin allows to pass through is greater than 60% making it possible to clearly distinguish objects through its thickness,
- of at least one inorganic filler and/or of at least one plant filler in the form of micronized particles, said constituents conferring on said part a plain background that is translucent allowing visible light to pass through without, however, making it possible to clearly distinguish the outlines of objects through, indeed even optionally transparent allowing more than 60% of the visible light to pass through making it possible to clearly distinguish objects through its thickness, in which background the hue of said micronized particles of said at least one inorganic filler and/or of the micronized particles of said at least one plant filler is diffused and which background is sprinkled with said micronized particles resulting from said at least one plant filler and/or with said micronized particles resulting from said at least one inorganic filler.

2. Part according to Claim 1, **characterized in that** the virgin and/or recycled thermoplastic resin is a biobased or predominantly biobased resin or a mixture of biobased or predominantly biobased resins, and is preferably chosen from the group formed by polyesters, in particular polyhydroxyalkanoates (PHA) or their derivatives, polypropylenes (PP) or their derivatives, polyethylenes (PE) or their derivatives, PLA and its derivatives and/or ABS and its derivatives.

3. Part according to Claim 2, **characterized in that** the resin(s) are biodegradable in all or in part.

4. Part according to Claim 2 or 3, **characterized in that** the resin(s) result from the bacterial fermentation of sugars or lipids.

5. Part according to any one of Claims 1 to 4, **characterized in that** the amount of resin(s) in the finished part is greater than 90% by weight.

6. Part according to any one of Claims 1 to 5, **characterized in that** the inorganic filler consists of soils to be recycled, in particular clayey soils and/or dirt, dried and/or sieved and/or ground and micronized to give particles.

7. Part according to any one of Claims 1 to 6, **characterized in that** the plant filler consists of plants, preferably of plant waste, dried, ground, micronized and sieved and more preferably of plant waste resulting from cutting, pruning, felling, mowing or the like.

8. Part according to any one of Claims 1 to 7, **characterized in that** it is obtained exclusively from resin(s) and from inorganic and plant filler(s) and that the combined inorganic and plant fillers represent at most 10% by weight of said part, with the exclusion of any other additive.

9. Part according to any one of Claims 1 to 8, **characterized in that** the inorganic filler represents between 1% and 7.5% by weight of the mixture intended to form said part.

10. Part according to any one of Claims 1 to 9, **characterized in that** the plant filler represents between 0.1% and 5% by weight of the mixture intended to form said part.

11. Part according to any one of Claims 1 to 10, **characterized in that** it exhibits at least one additional translucent, indeed even optionally transparent, outer layer, in the solid state at 20°C, with a percentage of traversing light of greater than 60%, in particular at least one protective layer, preferably applied by deposition, for example by spraying or by overmoulding, and made, or predominantly made, of said transparent or at least translucent plastic, preferably made of a plastic consisting, or predominantly consisting, of polypropylene or of polyurethane.

12. Vehicle, in particular motor vehicle, **characterized in that** it comprises at least one interior part produced according to any one of Claims 1 to 11.
